# FASCICULE DE BREVET EUROPEEN

(11) **EP 1 592 883 B1**
(45) Date de publication et mention de la délivrance du brevet: **02.04.2008**
(21) Numéro de dépôt: 04700463.5
(22) Date de dépôt: 07.01.2004
(51) Int. Cl.: F03D 1/06, F03D 11/02, B64C 21/04, B64C 21/06

(54) **DISPOSITIF POUR AMELIIORER LE RENDEMENT DES PALES D'EOLIENNE**
VORRICHTUNG ZUR VERBESSERUNG DER LEISTUNG VON WINDTURBINENFLÜGELN
DEVICE FOR IMPROVING WIND TURBINE BLADE PERFORMANCE

(30) Priorité: 12.02.2003 FR 0301641
(43) Date de publication de la demande: 09.11.2005
(73) Titulaire: Boulisset, Georges, 20137 Porto-Vecchio (FR)
(72) Inventeur: Boulisset, Georges, 20137 Porto-Vecchio (FR)
(74) Mandataire: Marek, Pierre
(86) Numéro de dépôt international: PCT/FR2004/000011
(87) Numéro de publication internationale: WO 2004/081374

(56) Documents cités:
- GB-A- 2 186 033
- US-A- 4 197 053
- US-B1- 6 203 269

## Description

La présente invention consiste à modifier des pales d'éolienne pour améliorer le rendement à condition que les pales soient entièrement creuses, pour que le vent puisse exercer son action par l'intèrieur de celles_ci. Il faudra pour cela,des ouvertures et des évacuations judicieusement dimensionnées et placées pour que le vent,par son action, puisse diminuer la trainée.Cette diminution de la trainée engendre une augmentation de la portance,puisque ces deux forces sont complèmentaires ,quand l'une augmente l'autre diminue et inversement Dans notre cas si la portance croit le rendement de l'éolienne grandira .

Auparavent,des inventeurs se sont penchés sur la con_ ception des pales d'éolienne de diverses façons :
1) Le brevet suisse N° 504 687 du 15/06/1975,montre une éolienne bipale très partiellement creuse. Elle possède une embouchure qui se prolonge par un conduit longeant le bord d'attaque et aboutissant en bout de pale par une tuyère. L'inventeur tente ,avec la force centrifuge, d'améliorer son rendement, ce qui est loin d'être le cas.
2) Le brevet français N° 00 11951 du 20/09/2000,montre une pale creuse avec entrée d'air sur l'intrados et des tuyères sur le bord de fuite vers l'extrémité de la pale, de surface plus petite pour bénéficier d'une pression intèrieure engendrant une poussée rèactive à la sortie. Les résultats sont malheureusement peu encourageants.

Une pale d'éolienne selon l'art antérieur est presentée dans le document US 6 203 269.

Pour réaliser la présente invention et obtenir une amèlioration du rendement de l'éolienne, on va apporter des transformations à des pales entièrement creuses avec un but bien précis : diminuer la trainée,laquelle est causée en partie par des turbulences ou tourbillons sur l'arrière du bord de fuite de la pale pendant sa rotation..

Selon la grandeur de la pale et son profil, on créera une ou plusieurs ouvertures oblongues(4) sur l'intrados(17), près du bord d'attaque (2),tangentant la ligne qui sépare extrados et intrados, dans une zone située sur le 1/3 de la longueur de la pale à partir de son extrèmité(15). Cet emplacement est choisi pour faire entrer le vent dans l'intèrieur de la pale creuse à un endroit où la vitesse relative du vent (14) ,(résultante de la vitesse du vent et de la vitesse apparente,due à la rotation de la pale), est la plus grande possible .

Pour obtenir une bonne circulation du vent dans l'intèrieur de la pale,il faudra le canaliser dès son entrée en installant un déflecteur (18)de forme incurvée entre la face intérieure de l'intrados (12)et celle de l'extrados (13) et s'étendant du point (19) de l'ouverture (4)jusqu'au bord intèrieur de la première entretoise(20).Ce déflecteur servira en même temps à isoler l'extrèmité interieure (8) de la pale pour empècher des tourbillons,qui auraient pu éventuellement s'y former, de freiner la circulation du vent.

Pour obtenir le meilleur effet sur la trainée, une fente étroite (5) sera pratiquée dans le bord de fuite(3) et s'étendra sur les 2/3 de la longueur de la pale à partir de son pied (16). De plus pour rigidifier cet espace (21) interieur près de la fente et répartir le vent d'une façon uniforme tout le long de cette fente, des entretoises (6) en nombre suffisant et de longueur adéquate seront fixées intèrieurement et perpendiculairement à la face interne de l'intrados et de l'extrados.Ces entretoises(6) s'arreteront à une distance de la fente (5) égale à la largeur de celle_ci. Par ailleurs ,elles seront bisautées (11) du coté fente . Ces deux détails techniques sont necessaires pour éviter des turbulences au passage du vent.

Ce vent circulant librement dans l'intèrieur creux (21) de la pale va ,à l'approche de sa sortie en raison du rétrécissement de cet espace intèrieur entre intrados / extrados, s'accelérer.Il sortira de la fente (5)à une vitesse bien supèrieure à la vitesse tangentielle exteriéure environnante sous forme d'une mince et rapide lame d'air capable d'éliminer les tourbillons qui se forment sur l'arrière du bord de fuite pendant la rotation de la pale. Ces tour_ billons sont une des causes de la trainée .En les supprimant on va diminuer la trainée, donc augmenter la portance et ainsi amèliorer le rendement de l'éolienne.

Pour résumer, cette invention consiste: 1°)à capter un.vent RELATIF dans la zone la plus favorable (le 1/3 environ de la longueur de la pale à partir de son extrèmité (15), là où la vitesse tangentielle est la plus grande ,à cause de la grande circonfèrence décrite par cette partie de la pale. 2°) à canaliser ce vent pour le faire ressortir par une fente étroite (5) s'étendant sur les 2/3 environ du bord de fuite à partir du pied (16) de la pale, à une vitesse plus grande que la vitesse tangentielle de cette zone , puisque la circonfèrence décrite ici par la pale est plus courte. Cette vitesse supèrieure du vent sortant va pouvoir éliminer les tourbillons du sillage de la pale qui génère de la trainée.

Les dessins annexés illustrant l'invention.

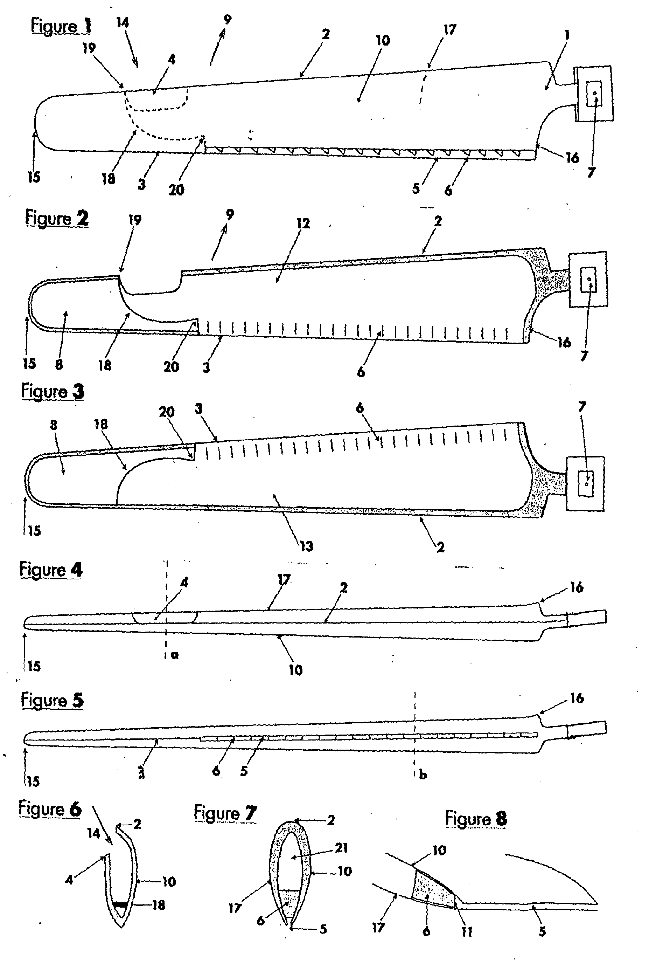

- Fig 1: Dessin montrant l'extrados,la fente,les entretoises L'ouverture,le déflecteur en pointillés sont sur l'autre face (intrados) ou à l'intèrieur de la pale.
- Fig 2: Coupe longitudinale à plat coté intrados.
- Fig 3: Coupe longitudinale à plat coté extrados .
- Fig 4: Bord d'attaque.
- Fig 5: Bord de fuite.
- Fig 6: Coupe transversale en (a)
- Fig 7: Coupe transversale en (b)
- Fig 8: Détails entretoise et fente.

### LEGENDE

- 1: Pale.
- 2: Bord d'attaque.
- 3: Bord de fuite .
- 4: Ouverture (entrée du vent)
- 5: Fente sur le bord de fuite.
- 6: Entretoise.
- 7: Axe de rotation .
- 8: Intèrieur creux de la pale .à son extrèmité.
- 9: Sens de rotation .
- 10: Extrados.
- 11: Côté bisauté de l'entretoise.
- 12: Face intèrieure de l'intrados .
- 13: Face intèrieure de l'extrados .
- 14: Vent relatif.
- 15: Extrèmité de la pale .
- 16: Pied de la pale .
- 17: Intrados .
- 18: Déflecteur .
- 19: Point de départ du déflecteur .
- 20: Première entretoise .
- 21: Intèrieur creux de la pale.

## Revendications

1. Pale d'éolienne entièrement creuse qui comporte:une ou des ouvertures(4) sur l'intrados (17) tangentant l'extrados (10) sur le bord d'attaque (2) dans le 1/3 environ de la pale à partir de son extrèmité (15),qui reçoit, par la vitesse de rotation de la pale ,un vent relatif plus rapide que celui qui s'écoule sur les deux autres tiers de cette pale ; un déflecteur (18) qui cloisonne l'intèrieur avant (8) de la pale et oriente le vent vers des entretoises (6) ; les entretoises (6) fixées dans l'intèrieur (21) de la pale dans la partie amincie entre l'intèrieur de l'intrados(12) et de l'extrados (13), cet agencement créant des espaces qui se rétrècissent, causant une accèlèration du flux d'air intèrieur vers une fente (5) étroite et continue (5) pratiquée dans le bord de fuite (3) la fente diffusant l'air accèlèré, provenant des espaces inter_entretoises, en une couche mince .

2. Dispositif selon la revendication, caractèrisé en ce que la ou les ouvertures , pour l'entrèe du vent, est de forme oblongue .

3. Dispositif selon la revendication, caractèrisé en ce que le déflecteur (18) relie les deux faces internes de la pale en s'incurvant concavement du point (19) de l'ouverture (4) à l'extrèmité de la première entretoise(20); cloisonne et isole l'extrèmité intèrieure (8) de la pale; oriente le vent dès son entrée dans la pale vers les entretoises (6) .

4. Dispositif selon la revendication 1, caractèrisé en ce que les entretoises (6) fixées dans l'intèrieur (21) sur les 2/3 environ de la longueur de la pale à partir de son pied (16),en nombre suffisant, de longueur adéquate, nécessires à la rigidité de la structure, bisautées côté sortie (11), s'arrètent à une distance de la fente (5) égale à la largeur de celle_ci ; les entretoises sont fixées dans la partie amincie de la pale, perpendiculairement à la face interne de l'intrados (12) et de l'extrados (13), formant avec ceux_ci des espaces qui se rètrècissent vers la fente (5), causant une accèlèration du flux d'air intèrieur vers la_dite fente (5) .

5. Dispositif selon la revendication 1, caractèrisé en ce que la fente étroite et continue (5) pratiquée dans le bord de fuite (3) s'étend sur les 2/3 environ de la longueur de la pale à partir du pied (16) et correspond aux entretoises (6) ; se situe à l'extrèmité du rétrècissement entre l'intèrieur de l'intrados (12) et de l'extrados (13) et sert à diffuser le flux d'air, accélèré dans les espaces rétrècis précédents, sous forme d'une mince couche plus rapide que le vent relatif extèrieur de cette zône adjacente .

## Claims

1. An entirely hollow wind turbine blade which comprises: one or more openings (4) on the lower surface (17) touching the upper surface (10) on the leading edge (2) in the one-third approximately of the blade from its end (15), which, by virtue of the speed of rotation of the blade, receives a relative wind which is of higher speed than that which flows along the other two thirds of said blade; a deflector (18) which partitions the front interior (8) of the blade and directs the wind towards spacers (6); the spacers (6) being fixed in the interior (21) of the blade in the narrowed portion between the interior of the lower surface (12) and the upper surface (13), that arrangement creating spaces which narrow, causing acceleration of the interior air flow towards a narrow continuous slot (5) provided in the trailing edge (3), the slot diffusing the accelerated air coming from the inter-spacer spaces in the form of a thin layer.

2. A device according to claim 1 **characterised in that** the opening or openings for the intake of the wind is of an oblong shape.

3. A device according to claim 1 **characterised in that** the deflector (18) connects the two internal faces of the blade, curving concavely from the point (19) of the opening (4) to the end of the first spacer (20); partitions and isolates the interior end (8) of the blade; and directs the wind from its entry into the blade towards the spacers (6).

4. A device according to claim 1 **characterised in that** the spacers (6) which are fixed in the interior (21) over two-thirds approximately of the length of the blade from its root end (16) in sufficient numbers and of appropriate length necessary for the rigidity of the structure, being chamfered at the outlet end (11), terminate at a distance from the slot (5) that is equal to the width thereof; the spacers are fixed in the narrowed portion of the blade perpendicularly to the internal face of the lower surface (12) and the upper surface (13), forming with them spaces which narrow towards the slot (5), causing acceleration of the interior air flow towards said slot (5).

5. A device according to claim 1 **characterised in that** the narrow continuous slot (5) provided in the trailing edge (3) extends over two-thirds approximately of the length of the blade from the root end (16) and corresponds to the spacers (6); is disposed at the end of the narrowing between the interior of the lower surface (12) and the upper surface (13) and serves to diffuse the air flow which is accelerated in the preceding narrowed spaces in the form of a thin layer of higher speed than the relative external wind of said adjacent zone.

## Patentansprüche

1. Vollständig hohles Windturbinenblatt, enthaltend: eine oder mehrere Öffnungen (4) auf der Druckseite (17), welche die Ansaugseite (10) an der Blattvorderkante (2) in etwa dem Drittel des Blatts ausgehend von seinem Ende (15) tangieren, die durch die Umdrehungsgeschwindigkeit des Blatts Wind erhält, der relativ schneller als derjenige ist, der auf den zwei anderen Dritteln dieses Blatts abfließt; einen Deflektor (18), der den vorderen Innenraum (8) des Blatts durch eine Zwischenwand unterteilt und den Wind auf Zwischenwände (6) ausrichtet; wobei die Zwischenwände (6) in dem Innenraum (21) des Blatts in dem verjüngten Teil zwischen dem Inneren der Druckseite (12) und der Ansaugseite (13) befestigt sind, wobei diese Anordnung Räume erzeugt, die enger werden, wodurch eine Beschleunigung des inneren Luftstroms zu einem engen und durchgehenden Schlitz (5) verursacht wird, der in der Austrittskante (3) ausgeführt ist, wobei der Schlitz die beschleunigte Luft, die aus den Räumen zwischen den Zwischenwänden kommt, in einer dünnen Schicht verbreitet.

2. Vorrichtung nach Anspruch 1, **dadurch gekennzeichnet, dass** die Öffnung bzw. Öffnungen für den Windeinlass eine längliche Form aufweisen.

3. Vorrichtung nach Anspruch 1, **dadurch gekennzeichnet, dass** der Deflektor (18) die zwei Innenseiten des Blatts miteinander verbindet, indem er sich konkav vom Punkt (19) der Öffnung (4) zu dem Ende der ersten Zwischenwand (20) krümmt; das innere Ende (8) des Blatts abteilt und isoliert; den Wind ab seinem Eintritt in den Blatt zu den Zwischenwänden (6) ausrichtet.

4. Vorrichtung nach Anspruch 1, **dadurch gekennzeichnet, dass** die Zwischenwände, die in dem Innenraum (21) auf den etwa 2/3 der Länge des Blatts ausgehend von seinem Fuß (16) in ausreichender Anzahl mit zweckmäßiger Länge befestigt und die für die Steifigkeit der Struktur notwendig und ausgangsseitig (11) abgeschrägt sind, in einem Abstand von dem Schlitz (5), der gleich dessen Breite ist, enden; die Zwischenwände in dem verjüngten Teil des Blatts senkrecht zu der Innenseite der Druckseite (12) und der Ansaugseite (13) befestigt sind, wobei sie mit diesen Räume ausbilden, die zu dem Schlitz hin enger werden, wodurch eine Beschleunigung des inneren Luftstroms zu dem Schlitz (5) verursacht wird.

5. Vorrichtung nach Anspruch 1, **dadurch gekennzeichnet, dass** der enge und durchgehende Schlitz (5), der in der Austrittskante (3) ausgeführt ist, sich über etwa 2/3 der Länge des Blatts ausgehend von dem Fuß (16) erstreckt und den Zwischenwänden (6) entspricht; er sich an dem Ende der Verjüngung zwischen dem Innenraum der Druckseite (12) und der Ansaugseite (13) befindet und dazu dient, den beschleunigten Luftstrom in den vorgenannten enger werdenden Räumen in Form einer dünnen Schicht zu verbreiten, die schneller ist als der relative äußere Wind dieser angrenzenden Zone.
